# EUROPEAN PATENT SPECIFICATION

(11) **EP 2 704 976 B1**
(45) Date of publication and mention of the grant of the patent: **22.07.2015**
(21) Application number: 12720297.6
(22) Date of filing: 02.05.2012
(51) Int. Cl.: B66C 3/00, F16F 7/02

(54) **SWING DAMPER WITH DISC BRAKES AND ITS CONTROL MECHANISM**
SCHWINGUNGSDÄMPFER MIT SCHEIBENBREMSEN UND STEUERMECHANISMUS DAFÜR
AMORTISSEUR DOTÉ DE FREINS À DISQUE ET SON MÉCANISME DE COMMANDE

(30) Priority: 02.05.2011 LV 111162
(43) Date of publication of application: 12.03.2014
(73) Proprietor: BALTROTORS, SIA, Salaspils 2169 (LV)
(72) Inventor: MARTINSONS, Andris, LV-2169 Salaspils (LV)
(74) Representative: Kuzjukevica, Lucija
(86) International application number: PCT/LV2012/000006
(87) International publication number: WO 2012/150852

(56) References cited:
- WO-A1-2009/151365
- US-A- 4 335 914
- US-A- 4 810 020
- US-A- 5 110 169

## Description

### Field of the invention

Invention refers to swing dampers, in particular to the swing dampers comprising disc brakes.

Swing dampers usually are used in suspensions that connect a crane arm of a hydraulic crane to rotator, which drives crane's actuators: harvesters; grabs; grapples and the like hydraulic actuators. The swing damper dampens oscillations of the actuator during its operation.

### Background of the invention

There is known US patent No. US 5110169 that describes swing damper comprising plurality of braking discs that tensioned by means of screw and disc spring. Assembly of disc brakes is disposed beyond and out of swinging connection. Such a construction increases a size of the swing damper and not suitable for compact size excavators, grabbers and grapplers, as well as increases a risk to brake said construction by means of outer action. Swing damper of similar construction is described in US patent No. US 4335914. There is known swing damper with disc construction, where disc brakes are arranged between lugs of suspension. Said design is compact and protected from the influence of environment. A disc spring works as a pressing mechanism of disc brakes. Said design is described in US patent No. 4810020. Disadvantage of the design is a use of the disc spring, which during longer service period looses its elasticity and therefore looses its ability to tension the disc brakes of the swing damper. Additionally said mechanism controls a pressure force of the disc brakes by means of hydraulic system, which increases the cost of suspension itself. In practice it is observed that there is big possibility of leakage of hydraulic liquid, where it can get into disc brakes and decrease its effectiveness or even damage them.

WO 2009/151365 discloses a method and arrangement related to a swing damper. Said swing damper includes a first swing joint with a first brake arrangement and a second swing joint with a second brake arrangement. Braking is achieved by operating a controller operating between the first and the second brake arrangements.

### Objective and summary of the invention

Taking into account known construction of swing dampers and wishes of industry it can be concluded that there is a need for compact swing damper with easy to use tensioning mechanism of discs. Aim of the invention is to design a compact swing damper comprising disc brakes with improves service time and reliability.

Aim of the invention is reached by designing a swing damper dampening a swing motion or oscillation of working element, comprising an upper part, having at least two lugs, and a lower part, having at least two lugs. The upper part and the lower part of the swing damper are pivotally connected to each other by means of a centre pin providing rotation between both parts. Between the lugs of the upper part and the lugs of the lower part are arranged discs, which can rotate around a centre axis of the centre pin. Brake discs that are fixed to the upper part of the swing damper are called as contra discs that are secured against rotation relative to the upper part. Brake discs that are fixed to the lower part of the swing damper are secured against rotation relative to said lower part. Friction pads are connected to said discs. Designed swing damper is characterised in that a tensioning mechanism and its control means are disposed into a cut-out made between two lugs of the upper part by means of which effective swing dampening of a suspension is provided. The tensioning mechanism and its control means arrangement in the swing damper provide compact design, which is very important for harvesters.

The tensioning mechanism comprises an adjusting disc disposed on the centre pin with clearance fit and which on both of its end surfaces comprises radially extending wedge like cavities. The tensioning mechanism further comprises at least two push rods and corresponding springs, that are arranged in a through holes formed in the lugs of the upper part in such a way that heads of push rods rests into cavities of the adjusting disc, but one end of the springs associated with the push rods rests on a surface of the contra discs. The through holes are formed so, that in radial direction they are close enough to arrangement of braking elements. Such arrangement provides that between tensioning elements, i.e. between the springs and work surface of brakes, huge bending moments are not generated. Said cavities that are as a radially extending wedge like cavities, are formed onto both end surfaces of the adjusting disc. On each end surface at least two of preferably four cavities can be formed. The cavities formed on the each end surface of the adjusting disc are opposed symmetrically to each other or opposed alternatively to each other. An ascending slope of the cavities of the adjusting disc, providing gradual axial movement of the push rod, is in range of 8 to 14 degrees, especially 11 degrees.

A control means of the swing damper is designed so as to provide rotational movement of the adjusting disc in result of which said push rods are moved and said springs are tensioned, which transfers its force to the contra discs, in result of which discs are pressed together and effective dampening of swing motion for suspension is provided.

Said control means comprises a hook fixed to the adjusting disc and a through hole is formed in it. Additionally said control means comprises a first pin secured into the holes of the hook, wherein a threaded hole is provided in the first pin. The control means also comprises a second pin arranged between both lugs of the upper part. Both ends of the second pin are secured in fixed connection in the holes formed in the lugs of the upper part, wherein a through hole is formed in the middle of the second pin.

Additionally said control means comprises a control screw that runs through the hole of the second pin till the first pin, where a threaded part of the screw goes into a screwed connection with the threaded hole of the first pin in such a way that by means of rotating the control screw rotational movement is provided for the hook and the adjusting disc. Additionally to the control screw a stop nut is arranged preventing further undesirable linear movement of the control screw.

There is possible an option where the control means is in form of worm gear, i.e. the adjusting disc with cut in teeth is like a gear, but instead of control screw a worm is arranged. By turning a worm control of disc rotation is obtained.

The control means also can be a hydraulic cylinder or pneumatic cylinder or electric actuator, where its linear movement provides rotational movement of the adjusting disc. Method for adjusting a braking force of swinging motion for a swing damper, characterised in that discs are pushed together using a tensioning mechanism controlled by a control means.

The discs are pushed together by means of a spring pressing force, wherein tensioning of the spring is adjusted by turning a control screw of the control means, where by linear movement of the control screw an adjusting disc is rotated, which due to cavities moves a push rod, which in turn acts on said springs.

### Detailed description of the invention

The invention is described by the following drawings:
Fig. 1A - illustrates a swing damper 1 in assembled state;
Fig. 1B - illustrates a swing damper 1 with braking discs 6a, 6b, 7a and 7b in disassembled state;
Fig. 2 - illustrates a swing damper 1 in a cross section;
Fig. 3A - illustrates a position of a tensioning element 10 of braking disc 6a. 6b, 7a and 7b of a swing damper 1 and control means 30 at the beginning of service, when new braking discs 6a, 6b, 7a and 7b are installed;
Fig. 3B - illustrates a position of a tensioning element 10 of braking disc 6a, 6b, 7a and 7b of a swing damper 1 and control means 30 at the end of service, when braking discs 6a, 6b,
7a and 7b are wear out to such a state, that they have to be changed;
Fig. 4 - illustrates a tensioning element 10 and a control means 30 in axonometric view;
Fig. 5A - illustrates an adjusting disc 11;
Fig. 5B - illustrates a cavity "d" of an adjusting disc 11 in a cross section E-E (see Fig. 5A).

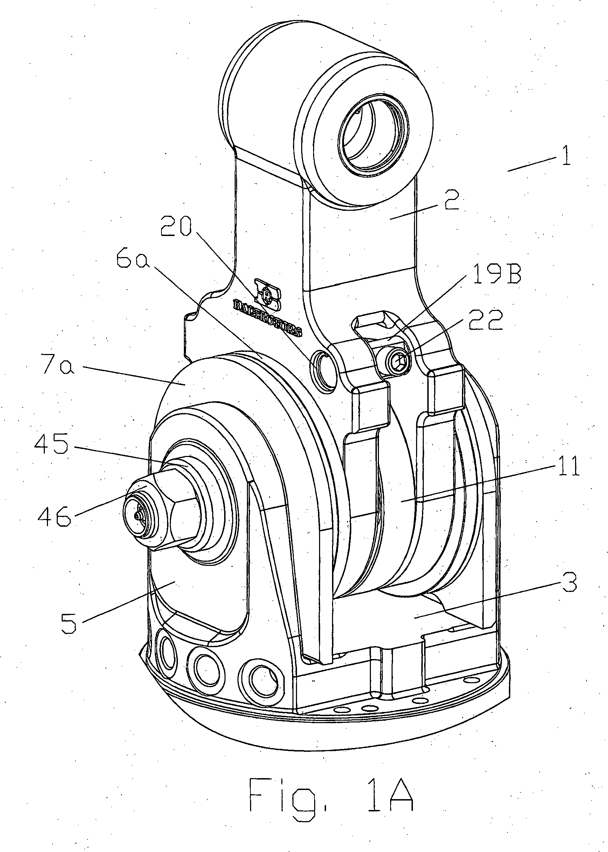

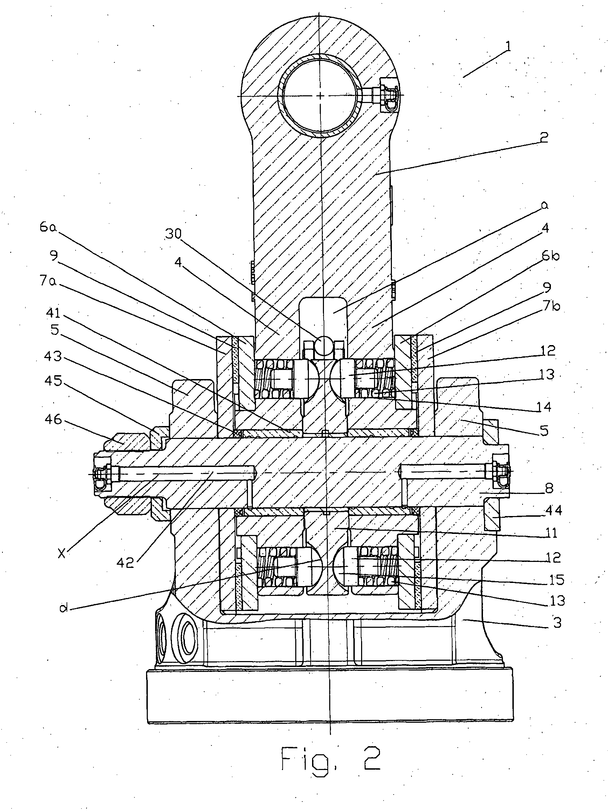

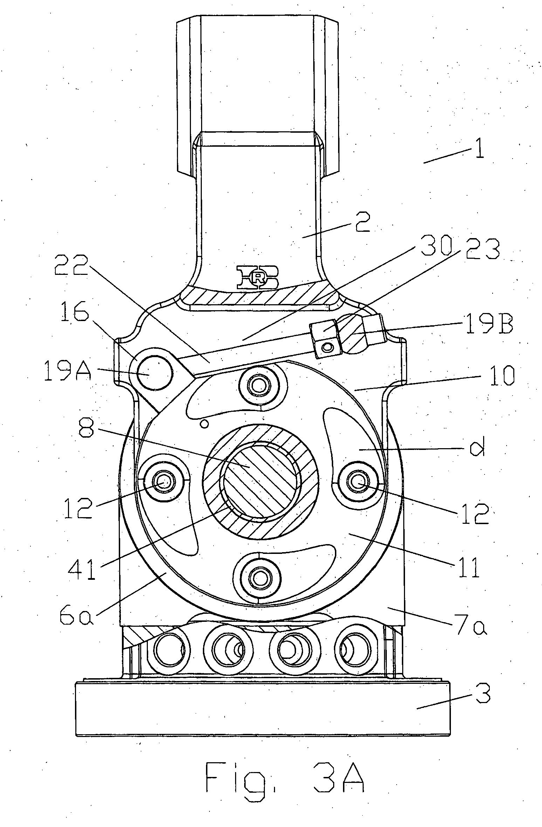

In Fig. 1A a swing damper 1 is showed in assembled state. An upper part 2 of the swing damper 1 can be connected to a crane arm or to another one of suspension elements. The lower part 3 of the swing damper 1 is connected to a rotator. There is possible an option that the rotator is integrally connected to the lower part 3 so that they make one whole part. Any working element, which need swing dampening during operation, can be connected to the lower part 3. Braking discs 6a, 6b, 7a and 7b, which carry out swing dampening by braking mutual rotation of both parts 2 and 3, are arranged between lugs 4, 5 of both parts 2 and 3. In the upper part 2 into a cut-out "a" made between its two lugs 4 is disposed a tensioning mechanism 10 as shown in Fig. 2 to Fig. 4, and control means 20 of said mechanism as shown in Fig. 3A to Fig. 4, and partly is Fig. 1A.

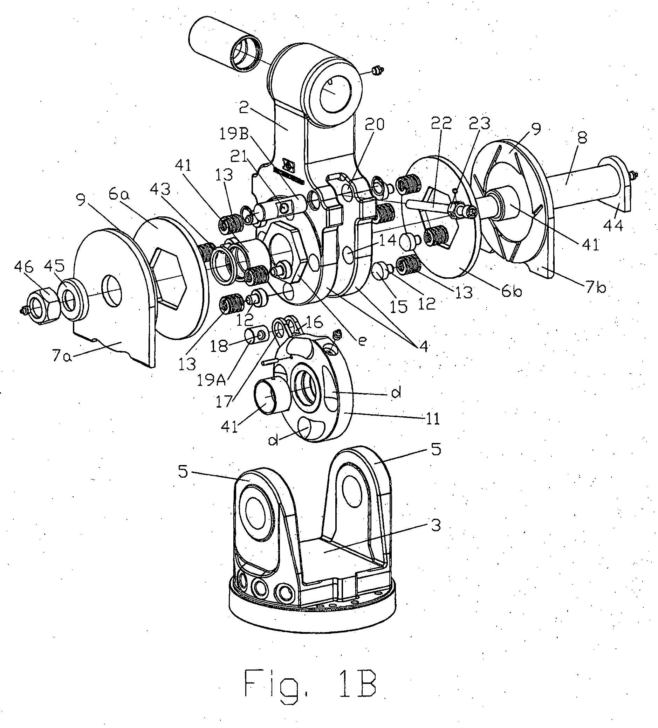

In Fig. 1B is shown a swing damper 1 in disassembled state, which vividly shows a shape of each part and arrangement in a design.

In Fig. 2 is shown a swing damper 1 in a cross section, where cavities "d" of an adjusting disc 11 can be seen, as well as link between the adjusting disc 11 and push rods 12, and link between push rods 12 and tensioning springs 13 and their influence on contra discs 6a and 6b can be seen.

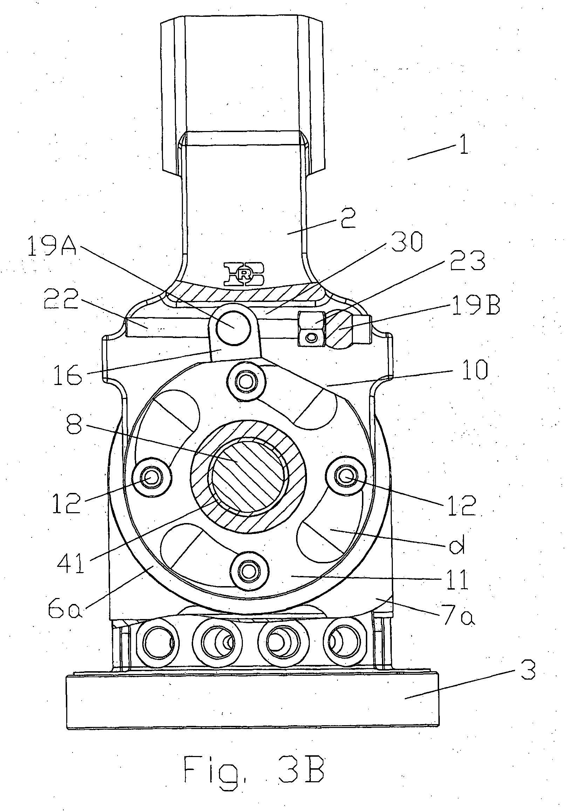

In Fig. 3A is shown a position of a control means 30 and an adjusting disc 11, when a swing damper 1 is fully assembled and ready for work. In said position braking discs 6a, 6b, 7a and 7b with friction pads 9 are completely new. Push rods 12 are displaced in the deepest part of cavity "d" of the adjusting disc 11. In Fig. 3B is shown a position of the control means 30 and the adjusting disc 11, when friction pads 9 of braking discs 7A and 7b are completely worn out. Push rods 12 are displaced in the shallowest part of cavity "d" of the adjusting disc 11.

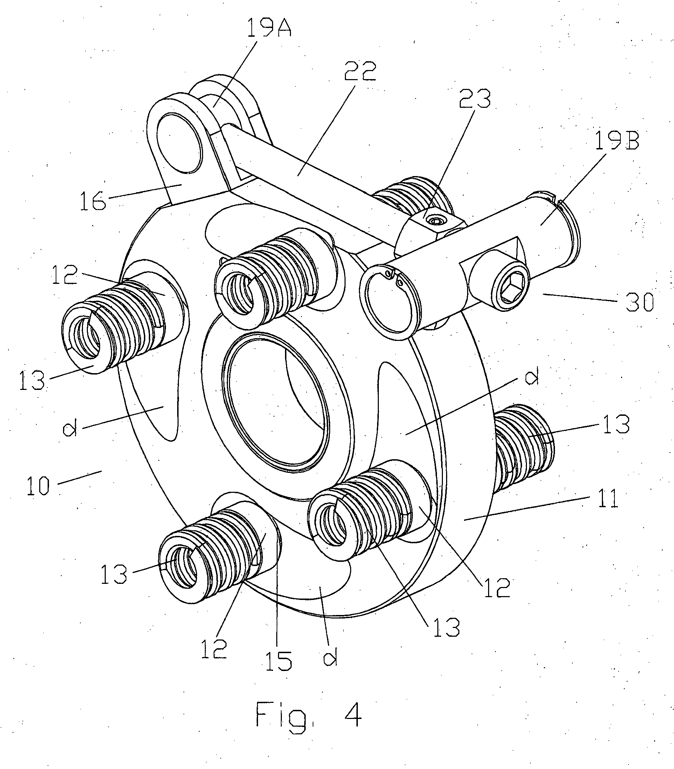

In Fig. 4 is shown a tensioning mechanism 10 and a control means 30 of the tensioning mechanism 30. For providing a clearness an upper 2 and lower 3 part of a swing damper 1 as well as braking discs 6a, 6b, 7a and 7b and centre pin 8 are deleted.

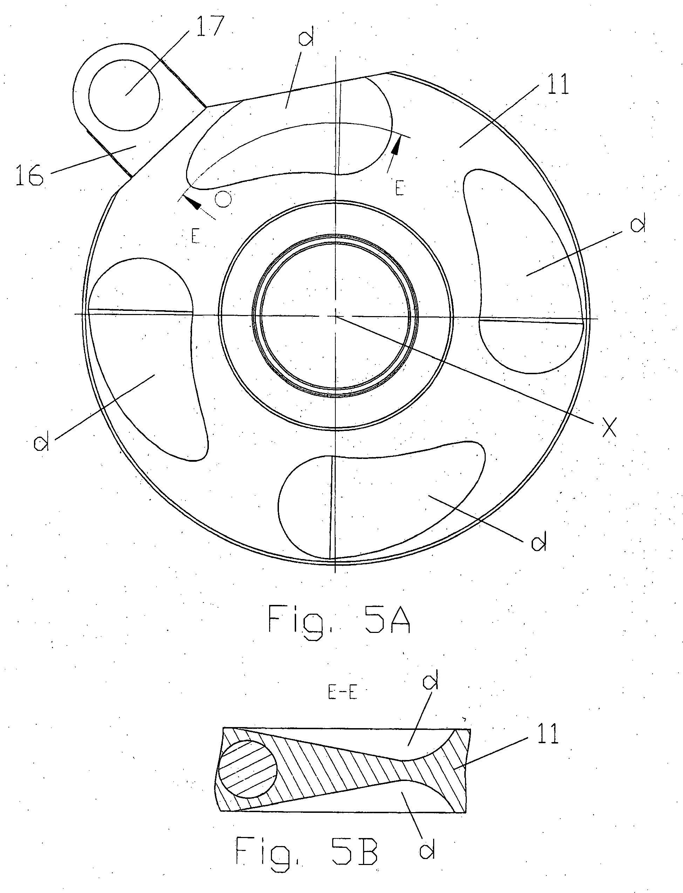

In Fig. 5A is shown an adjusting disc 11 with a hook 16 attached to it, in which a hole 17 is formed. Four wedge like cavities "d" are provided on an end surface or base of the adjusting disc 11. Such a cavities "d" are provided also on the opposite side of the adjusting disc 11. Cavities "d" can be directly opposed to each other or displaced alternatively to each other. A shape of the cavity "d" depends from a shape of a head 15 of a push rod 12 and other way. In Fig. 5B is shown a cavity "d" in a cross section showing its depth and slope.

### Preferred embodiment of the invention

The best mode for a swing damper comprising disc brakes is the swing damper for forwarders. A swing damper 1 comprises an upper part 2, which is connected to a crane arm, and a lower part 3, which is connected to a rotator. The upper part 2 is in pivotal connecting with the lower part 3, where both parts 2 and 3 are connected by means of a centre pin 8. Mutual rotation of both parts 2 and 3 is realized through a centre axis X, which is also an axis of the centre pin 8. Slide bearing 41 comprising built-in oil channels is arranged between the upper part 2 and the centre pin8. Lubrication channels 42, which lubricate said slide bearings 41, are formed into the centre pin 8. To prevent oil leakage from the slide bearings 41, then in its ends a seals 43 are arranged. Brake discs 6a, 6b and 7a, 7b are arranged between the lugs 4 of the upper part 2 and the lugs 5 of the lower part 3. Brake discs or contra discs 6a and 6b are fixed to the lugs 4 of the upper part 2 by means of cams "e". Due to hexagon cams "e" extending from outer part of each lug 4 a movement of the contra discs 6a and 6b relative to the upper part 2 is restricted. In assembled state the centre pin 8 on one of its ends has a flange 44, but on other end washer 45 and nut 46 are arranged. Friction pads 9 are arranged onto the brake discs 7a and 7b.

In the upper part 2 into a cut-out "a" made between its two lugs 4 is disposed a tensioning mechanism 10. The tensioning mechanism 10 comprises the adjusting disc 11 arranged onto the centre pin 8 via the slide bearing. On each end surface of the adjusting disc 11 are formed radially extending wedge like cavities "d". Cavities "d" arranged on each end surface are opposed to each other, to balance a force acting on each cavity. The tensioning mechanism 10 comprises eight push rods 12, where each push rod 12 rests in said cavity "d" using end surface or a head 15 of the push rod 12. Respective cylindrical springs 13 are arranged between push rods 12 and contra discs 6a and 6b. Said push rods 12 at least partly are arranged into the holes 14 of the lugs 2 of the upper part 2.In turn cylindrical springs 13 are completely arranged into the holes 14, one end of which rests against the contra disc 6a or 6b, but other end of which rests against a back part of the head 15 of the push rod 12. Ascending slope of radially extending wedge like cavities "d" is 11 degrees. Such a design of cavities "d" provides that during rotation of the adjusting disc 11 push rods 12, disposed into the cavities "d", can move axially relative to the centre axis X.

Additionally, the tensioning mechanism 10 comprises a control means 30 by means of which rotation of the adjusting disc 11 is controlled, which in turn acts on the push rod 12 and with it associated spring's 13 pressing force against the contra discs 6a, 6b, in the result pushing together brake discs 6a, 6b, and 7a, 7b. The control means 30 comprises a hook 16 fixed on the adjusting disc 11. A through hole 17 is formed in the hook 16. The control means 30 comprises a first pin 19A and second pin 19B. The first pin 19A is secured between the holes 17 of the hook 16. In the first pin 19A is formed the hole 17 with inner screw thread. Each end of the second pin 19B is secured into a hole 20 formed in each lug 4. A control screw 22 is arranged between the first pin 19A and the second pin 19B. One end of the control screw 22, which is arranged into the threaded hole 17 of the first pin 19A comprises outer screw thread. By turning the control screw 22, its threaded connection to the first pin 19A provides movement of the hook 16 and the adjusting disc 11 fixed thereto, which in turn adjusts a pressure generated on the discs 6a, 6b, 7a and 7b. In the head of the control screw 22 a hexagon recess is formed for the insertion of hexagon key providing a turning of said control screw 22. Additionally, the control means 30 comprises a stop nut 23 arranged on the control screw 22 to prevent undesirable further linear movement of the control screw 22.

## Claims

1. A swing damper (1) for dampening a swing motion of working element, comprising an upper part (2), having at least two lugs (4), and a lower part (3), having at least two lugs (5), wherein the upper part (2) and the lower part (3) are pivotally connected to each other by means of a centre pin (8), and wherein between the lugs (4) of the upper part (2) and the lugs (5) of the lower part (3) are arranged discs (6a, 6b; 7a, 7b), which can swing around a centre axis (X), wherein the contra disc (6a, 6b) is secured against rotation relative to the upper part (2) and the brake disc (7a, 7b) comprising friction pads (9) is secured against rotation relative to the lower part (3), **characterised in that** a tensioning mechanism (10) is disposed into a cut-out (a) made between two lugs (4) of the upper part (2), comprising:
- an adjusting disc (11) disposed on the centre pin (8) and which on both of its end surfaces comprises radially extending wedge like cavities (d);
- at least two push rods (12) and corresponding springs (13), which are arranged in a through hole (14) formed in the lugs (4) of the upper part (2) in such a way that heads (15) of push rods (12) rests into cavities (d) of the adjusting disc (11), but one end of the springs (13) associated with the push rods (12) rests on a surface of the contra discs (6a, 6b);
- a control means (30) providing rotational movement of the adjusting disc (11) in result of which said push rods (12) are moved and said springs (13) are tensioned, which transfers its force to the contra discs (6a, 6b), pressing discs (6a, 6b; 7a, 7b) together and providing effective dampening of swing motion.

2. The swing damper (1) as claimed in claim 1, **characterised in that** the control means (30) comprises:
- a hook (16) fixed to the adjusting disc (11) and a through hole (17) is formed in it;
- a first pin (19A) arranged into the hole (17) of the hook (16), wherein a threaded hole (18) is provided in the first pin (19A);
- a second pin (19B) arranged between both lugs (4) of the upper part (2) and each end of the second pin (19B) is arranged in respective hole (20) of the each lug (4), wherein a through hole (21) is formed in the middle of the second pin (19B);
- a control screw (22) that runs through the hole (21) of the second pin (19B) till the first pin (19A), where a threaded part of the screw (22) goes into a screwed connection with the threaded hole (18) of the first pin (19A) is such a way that by means of rotating the control screw (22) rotational movement is provided for the hook (16) and the adjusting disc (11).

3. The swing damper (1) as claimed in claim 1 or 2, **characterised in that** the control means (30) is worm gear, where the adjusting disc (11) caries out a function of a gear with teeth on its circumference, but the control screw (22) caries out a function of a worm.

4. The swing damper (1) as claimed in claim 1, **characterised in that** at least two radially extending wedge like cavities (d), preferably four cavities (d), are formed on each end surface of the adjusting disc (11).

5. The swing damper (1) as claimed in claim 1 or 4, **characterised in that** the cavities (d) formed on the each end surface of the adjusting disc (11) are opposed symmetrically to each other.

6. The swing damper (1) as claimed in claim 1 or 4, **characterised in that** the cavities (d) formed on the each end surface of the adjusting disc (11) are opposed alternatively to each other.

7. The swing damper (1) as claimed in claim 1 or as claimed in any of claims 3 to 6, **characterised in that** an ascending slope of the cavities (d), providing gradual axial movement of the push rod (12), is in range of 8 to 14 degrees, especially 11 degrees.

8. The swing damper (1) as claimed in claim 2, **characterised in that** the control means (30) further comprises a stop nut (23) arranged on the control screw (22) to prevent further linear movement of the control screw (22).

9. Method for adjusting a braking force of swinging motion for a swing damper (1) according to any of claims 1 to 8, **characterised in that** discs (6a, 6b; 7a, 7b) are pushed together using a tensioning mechanism (10) controlled by a control means (30).

10. Method as claimed in claim 8, **characterised in that** the discs (6a, 6b; 7a, 7b) are pushed together by means of a spring (13), wherein tensioning of the spring (13) is adjusted by turning a control screw (22) of the control means (30), where by linear movement of the control screw (22) an adjusting disc (11) is rotated, which due to cavities (4) moves a push rod (12), which in turn acts on said springs (13).

## Patentansprüche

1. Schwingungsdämpfer (1) zum Dämpfen einer Schwingbewegung eines Arbeitselements, umfassend einen oberen Teil (2) mit wenigstens zwei Ansätzen (4) und einen unteren Teil (3) mit wenigstens zwei Ansätzen (5), wobei der obere Teil (2) und der untere Teil (3) durch einen Drehzapfen (8) schwenkbar miteinander verbunden sind, und wobei zwischen den Ansätzen (4) des oberen Teils (2) und den Ansätzen (5) des unteren Teils (3) Scheiben (6a, 6b; 7a, 7b) angeordnet sind, die um eine Mittelachse (X) schwingen können, wobei die Gegenscheibe (6a, 6b) gegen eine Verdrehung in Bezug auf den oberen Teil (2) gesichert ist, und die Bremsscheibe (7a, 7b), die Bremsbeläge (9) umfasst, gegen eine Verdrehung in Bezug auf den unteren Teil (3) gesichert ist, **dadurch gekennzeichnet, dass** in einem Ausschnitt (a), der zwischen zwei Ansätzen (4) des oberen Teils (2) hergestellt ist, ein Spannmechanismus (10) angeordnet ist, der Folgendes umfasst:
- eine Justierscheibe (11), die an dem Drehzapfen (8) angeordnet ist und an ihren beiden Endflächen radial verlaufende keilförmige Vertiefungen (d) umfasst;
- wenigstens zwei Schubstangen (12) und entsprechende Federn (13), die auf eine solche Weise in einer Durchgangsöffnung (14), welche in den Ansätzen (4) des oberen Teils (2) gebildet sind, angeordnet sind, dass Köpfe (15) der Schubstangen (12) in Vertiefungen (d) der Justierschiebe (11) ruhen, aber ein Ende der Federn (13), die den Schubstangen (12) zugehörig sind, an einer Fläche der Gegenscheiben (6a, 6b) ruht;
- ein Steuermittel (30), das eine Drehbewegung der Justierschiebe (11) bereitstellt, als deren Ergebnis die Schubstangen (12) bewegt werden und die Federn (13) gespannt werden, die ihre Kraft zu den Gegenscheiben (6a, 6b) übertragen, die Scheiben (6a, 6b; 7a, 7b) aneinanderpressen, und eine wirksame Dämpfung der Schwingbewegung bereitstellen.

2. Schwingungsdämpfer (1) nach Anspruch 1, **dadurch gekennzeichnet, dass** das Steuermittel (30) Folgendes umfasst:
- einen Haken (16), der an der Justierscheibe (11) fixiert ist, und eine darin gebildete Durchgangsöffnung (17);
- einen ersten Stift (19A), der in der Öffnung (17) des Hakens (16) angeordnet ist, wobei in dem ersten Stift (19A) ein Gewindeloch (18) bereitgestellt ist;
- einen zweiten Stift (19B), der zwischen beiden Ansätzen (4) des oberen Teils (2) angeordnet ist, wobei jedes Ende des zweiten Stifts (19B) in einer entsprechenden Öffnung (20) jedes Ansatzes (4) angeordnet ist, wobei in der Mitte des zweiten Stifts (19B) eine Durchgangsöffnung (21) gebildet ist;
- eine Steuerschraube (22), die durch die Öffnung (21) des zweiten Stifts (19B) bis zu dem ersten Stift (19A) verläuft, wo ein Gewindeteil der Schraube (22) auf eine solche Weise in eine Schraubverbindung mit der Gewindeöffnung (18) des ersten Stifts (19A) gelangt, dass durch ein Drehen der Steuerschraube (22) eine Drehbewegung für den Haken (16) und die Justierscheibe (11) bereitgestellt wird.

3. Schwingungsdämpfer (1) nach Anspruch 1 oder 2, **dadurch gekennzeichnet, dass** das Steuermittel (30) ein Schneckengetriebe ist, wobei die Justierscheibe (11) die Funktion eines Zahnrads mit Zähnen an seinem Umfang ausführt, aber die Steuerschraube (22) die Funktion einer Schnecke ausführt.

4. Schwingungsdämpfer (1) nach Anspruch 1, **dadurch gekennzeichnet, dass** die wenigstens zwei radial verlaufenden keilförmigen Vertiefungen (d), vorzugsweise vier Vertiefungen (d), an jeder Endfläche der Justierscheibe (11) gebildet sind.

5. Schwingungsdämpfer (1) nach Anspruch 1 oder 4, **dadurch gekennzeichnet, dass** die Vertiefungen (d), die an jeder Endfläche der Justierscheibe (11) gebildet sind, einander symmetrisch gegenüberliegen.

6. Schwingungsdämpfer (1) nach Anspruch 1 oder 4, **dadurch gekennzeichnet, dass** die Vertiefungen (d), die an jeder Endfläche der Justierscheibe (11) gebildet sind, einander abwechselnd gegenüberliegen.

7. Schwingungsdämpfer (1) nach Anspruch 1 oder nach einem der Ansprüche 3 bis 6, **dadurch gekennzeichnet, dass** eine Steigung der Vertiefungen (d), die eine allmähliche Bewegung der Schubstange (12) in der Achsenrichtung bereitstellt, in einem Bereich von 8 bis 14 Grad liegt und insbesondere 11 Grad beträgt.

8. Schwingungsdämpfer (1) nach Anspruch 2, **dadurch gekennzeichnet, dass** das Steuermittel (30) ferner eine Kontermutter (23) umfasst, die an der Steuerschraube (22) bereitgestellt ist, um eine weitere lineare Bewegung der Steuerschraube (22) zu verhindern.

9. Verfahren zum Einstellen einer Kraft zum Bremsen einer Schwingbewegung für einen Schwingungsdämpfer (1) nach einem der Ansprüche 1 bis 8, **dadurch gekennzeichnet, dass** Scheiben (6a, 6b; 7a, 7b) unter Verwendung eines Spannmechanismus (10), der durch ein Steuermittel (30) gesteuert wird, aneinandergeschoben werden.

10. Verfahren nach Anspruch 8, **dadurch gekennzeichnet, dass** die Scheiben (6a, 6b; 7a, 7b) durch eine Feder (13) aneinandergeschoben werden, wobei das Spannen der Feder (13) durch Drehen einer Steuerschraube (22) des Steuermittels (30) reguliert wird, wobei durch eine lineare Bewegung der Steuerschraube (22) eine Justierscheibe (11) gedreht wird, die durch Vertiefungen (4) eine Schubstange (12) bewegt, welche wiederum auf die Federn (13) wirkt.

## Revendications

1. Amortisseur d'oscillations (1) pour amortir un mouvement d'oscillation d'un élément de travail, comprenant une partie supérieure (2) ayant au moins deux ressauts (4) et une partie inférieure (3) ayant au moins deux ressauts (5), dans lequel la partie supérieure (2) et la partie inférieure (3) sont raccordées de manière pivotante l'une à l'autre au moyen d'une broche centrale (8) et dans lequel, entre les ressauts (4) de la partie supérieure (2) et les ressauts (5) de la partie inférieure (3), sont aménagés des disques (6a, 6b ; 7a, 7b), qui peuvent osciller autour d'un axe central (X), dans lequel le disque contraire (6a, 6b) est fixé à l'encontre d'une rotation par rapport à la partie supérieure (2) et le disque de frein (7a, 7b) comprenant des patins de frottement (9) est fixé à l'encontre d'une rotation par rapport à la partie inférieure (3), **caractérisé en ce qu'**un mécanisme de mise sous tension (10) est disposé dans une découpe (a) ménagée entre deux ressauts (4) de la partie supérieure (2), comprenant :
- un disque d'ajustement (11) disposé sur la broche centrale (8) et qui comprend, sur ses deux surfaces d'extrémité, des cavités en forme de cales (d) s'étendant radialement ;
- au moins deux tiges de poussée (12) et des ressorts correspondants (13), qui sont aménagés dans un trou traversant (14) formé dans les ressauts (4) de la partie supérieure (2) de sorte que les têtes (15) des tiges de poussée (12) reposent dans des cavités (d) du disque d'ajustement (11), mais qu'une extrémité des ressorts (13) associés aux tiges de poussée (12) repose sur une surface des disques contraires (6a, 6b) ;
- un moyen de commande (30) fournissant un mouvement de rotation du disque d'ajustement (11) à la suite de quoi lesdites tiges de poussée (12) sont déplacées et lesdits ressorts (13) sont placés sous tension, ce qui transfère leur force aux disques contraires (6a, 6b), presse mutuellement les disques (6a, 6b ; 7a, 7b) et assure un amortissement efficace du mouvement d'oscillation.

2. Amortisseur d'oscillations (1) selon la revendication 1, **caractérisé en ce que** le moyen de commande (30) comprend :
- un crochet (16) fixé au disque d'ajustement (11) et un trou traversant (17) qui est formé dans celui-ci ;
- une première broche (19A) aménagée dans le trou (17) du crochet (16), dans lequel un trou taraudé (18) est ménagé dans la première broche (19A) ;
- une seconde broche (19B) ménagée entre les deux ressauts (4) de la partie supérieure (2) et chaque extrémité de la seconde broche (19B) est aménagée dans un trou respectif (20) de chaque ressaut (4), dans lequel un trou traversant (21) est formé au centre de la seconde broche (19B) ;
- une vis de commande (22) qui court à travers le trou (21) de la seconde broche (19B) jusqu'à la première broche (19A), où une partie filetée de la vis (22) s'engage dans une liaison vissée avec le trou taraudé (18) de la première broche (19A) de sorte que, par rotation de la vis de commande (22), un mouvement rotatif soit appliqué au crochet (16) et au disque d'ajustement (11).

3. Amortisseur d'oscillations (1) selon la revendication 1 ou la revendication 2, **caractérisé en ce que** le moyen de commande (30) est un engrenage à vis sans fin, où le disque d'ajustement (11) remplit la fonction d'un engrenage avec des dents sur sa circonférence, mais la vis de commande (22) remplit la fonction d'une vis sans fin.

4. Amortisseur d'oscillations (1) selon la revendication 1, **caractérisé en ce qu'**au moins deux cavités en forme de cales (d) s'étendant radialement, de préférence quatre cavités (d), sont formées sur chaque surface d'extrémité du disque d'ajustement (11).

5. Amortisseur d'oscillations (1) selon la revendication 1 ou 4, **caractérisé en ce que** les cavités (d) formées sur chaque surface d'extrémité du disque d'ajustement (11) sont opposées symétriquement l'une à l'autre.

6. Amortisseur d'oscillations (1) selon la revendication 1 ou 4, **caractérisé en ce que** les cavités (d) formées sur chaque surface d'extrémité du disque d'ajustement (11) sont opposées alternativement l'une à l'autre.

7. Amortisseur d'oscillations (1) selon la revendication 1 ou selon l'une quelconque des revendications 3 à 6, **caractérisé en ce qu'**une pente ascendante des cavités (d) fournissant un mouvement axial graduel de la tige de poussée (12) se situe dans la plage de 8 à 14 degrés, en particulier 11 degrés.

8. Amortisseur d'oscillations (1) selon la revendication 2, **caractérisé en ce que** le moyen de commande (30) comprend en outre un écrou d'arrêt (23) aménagé sur la vis de commande (22) pour empêcher davantage de mouvement linéaire de la vis de commande (22).

9. Procédé d'ajustement d'une force de freinage d'un mouvement d'oscillation pour un amortisseur d'oscillations (1) selon l'une quelconque des revendications 1 à 8, **caractérisé en ce que** les disques (6a, 6b ; 7a, 7b) sont poussés ensemble par l'utilisation d'un mécanisme de mise sous tension (10) commandé par un moyen de commande (30).

10. Procédé selon la revendication 8, **caractérisé en ce que** les disques (6a, 6b ; 7a, 7b) sont poussés ensemble au moyen d'un ressort (13), dans lequel la mise sous tension du ressort (13) est ajustée par une rotation d'une vis de commande (22) du moyen de commande (30), où, par un mouvement linéaire de la vis de commande (22), on fait tourner un disque d'ajustement (11) qui, en raison de la présence des cavités (4), déplace une tige de poussée (12) qui, à son tour, agit sur lesdits ressorts (13).
